# EUROPEAN PATENT APPLICATION

(11) **EP 3 107 189 A1**
(43) Date of publication of application: **21.12.2016**
(21) Application number: 15748562.4
(22) Date of filing: 30.01.2015
(51) Int. Cl.: H02J 50/00

(54) **POWER TRANSMISSION EQUIPMENT AND NON-CONTACT POWER TRANSMISSION DEVICE**

(30) Priority: 13.02.2014 JP 2014025477
(71) Applicant: Kabushiki Kaisha Toyota Jidoshokki, Kariya-shi, Aichi 448-8671 (JP)
(72) Inventor: TAGUCHI, Yuichi, Kariya-shi, Aichi 448-8671 (JP)
(74) Representative: TBK
(86) International application number: PCT/JP2015/052620
(87) International publication number: WO 2015/122292

(57) **Abstract**

This power transmission equipment includes an AC power supply that outputs AC power, and a power transmitter to which said AC power is input. The power transmission equipment also includes an impedance converter that converts the input impedance of the power transmitter. The impedance converter is disposed between the AC power supply and the power transmitter. The constant of the impedance converter is set on the basis of the upper and lower limit values of the coupling coefficient.

## Description

### TECHNICAL FIELD

The present invention relates to a power transmission unit and a non-contact power transmission device.

### BACKGROUND ART

Patent Document 1 discloses an electric vehicle including a non-contact power transmission device that transmits power in a non-contact manner. The non-contact power transmission device includes a power transmission unit and a power receiving unit. The power transmission unit includes an AC power supply, which supplies AC power, and a primary-side coil, which receives the AC power. The power receiving unit includes a secondary-side coil, which can receive the AC power from the primary-side coil in a non-contact manner. In the non-contact power transmission device, power is transmitted from the power transmission unit to the power receiving unit in a non-contact manner by magnetic field resonance between the primary-side coil and the secondary-side coil.

When the power receiving unit is installed in a mobile body, such as a vehicle as described above, the relative positions of the primary-side coil and the secondary-side coil are changed, so that the input impedance of the primary-side coil is changed. This changes a power supply load impedance, which is an impedance when the primary-side coil is seen from the output end of the AC power supply. Thus, the power value of AC power that is supplied by the AC power supply is changed. This may result in failure of supplying AC power with a desired power value.

Considering this, it may be suggested not to change the relative positions of the primary-side coil and the secondary-side coil. However, this method is not desirable from the view point of convenience. Alternatively, it may be suggested to increase the rating of the AC power supply, i.e., the maximum output voltage, the maximum output current, or the like, to supply AC power with a desired power value even when the relative positions of the coils are changed. However, this method is not desirable since the cost of the AC power supply increases.

### PRIOR ART DOCUMENT

### PATENT DOCUMENT

Patent Document 1: Japanese Laid-Open Patent Publication No. 2009-106136

### SUMMARY OF THE INVENTION

### Problem that the Invention is to solve

It is an objective of the present invention to provide a power transmission unit and a non-contact power transmission device that can deal with a case in which the relative positions of the coils are changed.

### Means for Solving the Problems

To achieve the above objective, according to a first aspect of the present invention, a power transmission unit is provided that includes an AC power supply that supplies AC power and a primary-side coil that receives the AC power and allows the AC power to be transmitted to a secondary-side coil of a power receiving unit in a non-contact manner. The power transmission unit includes one or more impedance converting portions that are arranged between the AC power supply and the primary-side coil and perform impedance conversion of an input impedance of the primary-side coil. Impedances of the impedance converting portions are set based on a lower limit and an upper limit in a changing range of a coupling coefficient between the primary-side coil and the secondary-side coil in a case in which relative positions of the primary-side coil and the secondary-side coil are changed within a predetermined allowable range.

In this configuration, the impedances of the impedance converting portions are set based on the lower limit and the upper limit in the changing range of the coupling coefficient when the relative positions of the coils are changed in the allowable range. The coupling coefficient is a parameter that affects the input impedance of the primary-side coil. According to this configuration, the impedances of the impedance converting portions are set corresponding to the input impedance of the primary-side coil when the coupling coefficient has a value between the lower limit and the upper limit. Thus, in comparison with the configuration in which the impedances of the impedance converting portions are set corresponding to the input impedance of the primary-side coil when the coupling coefficient is less than the lower limit or when the coupling coefficient is greater than the upper limit, it is possible to favorably deal with changes in the relative positions of the coils.

To achieve the above objective, according to a second aspect of the present invention, a power transmission unit is provided that includes an AC power supply that supplies AC power and a primary-side coil that receives the AC power and allows the AC power to be transmitted to a secondary-side coil of a power receiving unit in a non-contact manner. The power transmission unit includes one or more impedance converting portions that are arranged between the AC power supply and the primary-side coil and perform impedance conversion of an input impedance of the primary-side coil. Impedances of the impedance converting portions are set based on a lower limit and an upper limit in a changing range of an input impedance in the primary-side coil when relative positions of the primary-side coil and the secondary-side coil are changed in a predetermined allowable range.

To achieve the above objective, according to a third aspect of the present invention, a non-contact power transmission device is provided that includes an AC power supply that supplies AC power, a primary-side coil that receives the AC power, a secondary-side coil capable of receiving the AC power received by the primary-side coil, a load that receives the AC power received by the secondary-side coil, and
one or more impedance converting portions that are arranged between the AC power supply and the primary-side coil and perform impedance conversion of an input impedance of the primary-side coil. Impedances of the impedance converting portions are set based on a lower limit and an upper limit in a changing range of a coupling coefficient between the primary-side coil and the secondary-side coil when relative positions of the primary-side coil and the secondary-side coil are changed in a predetermined allowable range.

In this configuration, the impedances of the impedance converting portions are set based on the lower limit and the upper limit in the changing range of the coupling coefficient when the relative positions of the coils are changed in the allowable range. The coupling coefficient is a parameter that affects the input impedance of the primary-side coil. According to the configuration, the impedances of the impedance converting portions are set corresponding to the input impedance of the primary-side coil when the coupling coefficient has a value between the lower limit and the upper limit. Thus, in comparison with the configuration in which the impedances of the impedance converting portions are set corresponding to the input impedance of the primary-side coil when the coupling coefficient is less than the lower limit or when the coupling coefficient is greater than the upper limit, it is possible to favorably deal with changes in the relative positions of the coils.

### BRIEF DESCRIPTION OF THE DRAWINGS

Fig. 1 is a circuit block diagram of a power transmission unit and a non-contact power transmission device according to a first embodiment of the present invention.
Fig. 2 is a conceptual diagram to describe an allowable range.
Fig. 3 is a circuit block diagram of a power transmission unit and a non-contact power transmission device according to a second embodiment.
Fig. 4 is a conceptual diagram to describe a coupling coefficient.

### EMBODIMENTS OF THE INVENTION

### First Embodiment

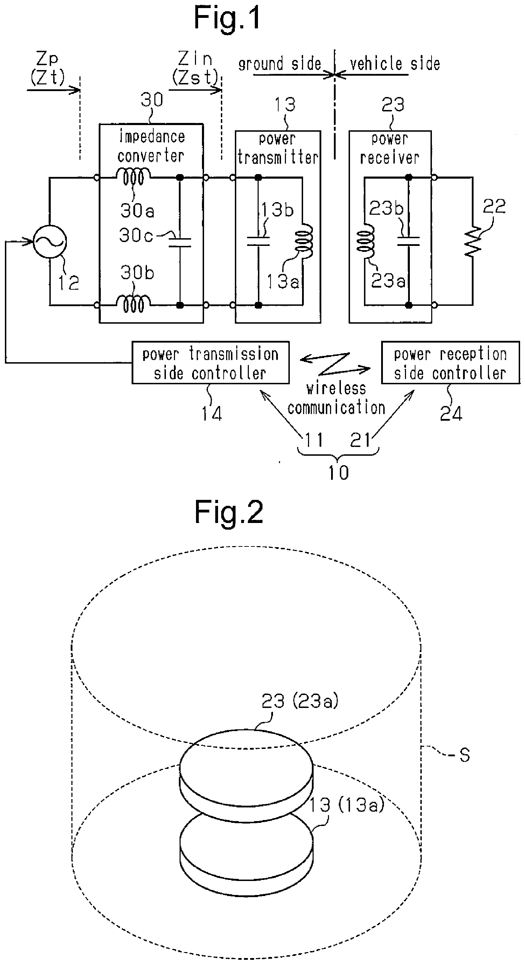

A power transmission unit and a non-contact power transmission device according to a first embodiment of the present invention is applied to a vehicle and will now be described with reference to Figs. 1 to 4.

As shown in Fig. 1, a non-contact power transmission device 10 includes a power transmission unit 11 and a power receiving unit 21 that can transmit electric power in a non-contact manner. The power transmission unit 11 is a power transmitting device or a primary unit as a different term. The power receiving unit 21 is a power receiving device or a secondary unit as a different term. The power transmission unit 11 is mounted on the ground, and the power receiving unit 21 is installed in a vehicle.

The power transmission unit 11 includes an AC power supply 12, which is capable of supplying AC power with a predetermined frequency. The AC power supply 12 receives system power from a system power source as infrastructure. The AC power supply 12 converts the system power from the system power source into AC power and supplies the converted AC power. The AC power supply 12 is capable of changing both the output voltage value and the output current value.

After being supplied from the AC power supply 12, the AC power is transmitted to the power receiving unit 21 in a non-contact manner, and a load 22 of the power receiving unit 21 receives the AC power. To transmit electric power between the power transmission unit 11 and the power receiving unit 21, the non-contact power transmission device 10 includes a power transmitter 13, which is arranged in the power transmission unit 11, and a power receiver 23, which is arranged in the power receiving unit 21.

The power transmitter 13 and the power receiver 23 have the same structure and are configured to allow magnetic field resonance between the power transmitter 13 and the power receiver 23. The power transmitter 13 includes an oscillating circuit including a primary-side coil 13a and a primary-side capacitor 13b, which are connected in parallel. The power receiver 23 includes an oscillating circuit including a secondary-side coil 23a and a secondary-side capacitor 23b, which are connected in parallel. The oscillating circuits of the power transmitter 13 and the power receiver 23 have resonance frequencies to be set the same as each other.

According to the above configuration, in circumstances in which the relative positions of the power transmitter 13 and the power receiver 23 are positions that allow magnetic field resonance, the primary-side coil 13a of the power transmitter 13 magnetically resonates with the secondary-side coil 23a of the power receiver 23 when the primary-side coil 13a of the power transmitter 13 receives AC power. Thus, the power receiver 23 receives some of the energy from the power transmitter 13. In other words, the power receiver 23 receives AC power from the power transmitter 13.

The frequency of AC power supplied by the AC power supply 12 is set corresponding to the resonance frequencies of the power transmitter 13 and the power receiver 23 to allow power transmission between the power transmitter 13 and the power receiver 23. For example, the frequency of the AC power is set to be the same as the resonance frequencies of the power transmitter 13 and the power receiver 23. Instead of this, the frequency of the AC power may differ from the resonance frequencies of the power transmitter 13 and the power receiver 23 as long as power transmission is allowed between the power transmitter 13 and the power receiver 23. The power transmitter 13 is arranged on the ground. The power receiver 23 is arranged to face the power transmitter 13 and, specifically, arranged at the bottom of the vehicle.

When the AC power is received by the power receiver 23, the load 22 receives the AC power. The load 22 includes an AC/DC converter, which converts the AC power into DC power, and a battery for a vehicle, which receives the DC power converted by the AC/DC converter. The battery for a vehicle is charged using AC power received by the power receiver 23.

The power transmission unit 11 includes a power transmission side controller 14, which controls the AC power supply 12 and the like. The power transmission side controller 14 controls on and off of the AC power supply 12 and controls the output voltage value and the output current value of the AC power supply 12. The power receiving unit 21 includes a power reception side controller 24 that is capable of wirelessly communicating with the power transmission side controller 14. Each of the controllers 14 and 24 starts or ends power transmission by sending and receiving information between them.

The relationship between the relative positions of the power transmitter 13 and the power receiver 23 and the coupling coefficient k between the primary-side coil 13a and the secondary-side coil 23a, the constant (impedance) of the impedance converter 30, and the like will now be described.

Since the power receiving unit 21 is mounted on a vehicle as described above, the relative positions of the power transmitter 13 and the power receiver 23 are changed. In this case, the coupling coefficient k between the primary-side coil 13a and the secondary-side coil 23a is changed depending on the relative positions of the power transmitter 13 and the power receiver 23. The coupling coefficient k is a parameter that affects an input impedance Zin of the power transmitter 13. Thus, as the coupling coefficient k is changed, the input impedance Zin of the power transmitter 13 is changed. As a result, the impedance when the primary-side coil 13a of the power transmitter 13 is seen from the output end of the AC power supply 12, i.e., a power supply load impedance Zp, is changed. In this case, the AC power supply 12 may fail to supply the AC power with a desired power value, i.e., a predetermined specific power value.

For example, as the coupling coefficient k is decreased, the input impedance Zin and the power supply load impedance Zp of the power transmitter 13 are decreased, so that the output current value of the AC power supply 12 may approach the maximum value. In this case, even though the output current value of the AC power supply 12 is the maximum value, the AC power supply 12 may supply only AC power with a lower value than the desired power value. In contrast, as the coupling coefficient k is increased, the input impedance Zin and the power supply load impedance Zp of the power transmitter 13 are increased, so that the output voltage value of the AC power supply 12 may approach the maximum value. In this case, even though the output voltage value of the AC power supply 12 is the maximum value, the AC power supply 12 may also supply only AC power with a lower value than the desired power value. Considering this, the non-contact power transmission device 10 includes a structure that deals with changes in the relative positions of the power transmitter 13 and the power receiver 23 in the power transmission unit 11.

As shown in Fig. 1, the power transmission unit 11 includes an impedance converter 30, which performs impedance conversion of the input impedance Zin in the primary-side coil 13a of the power transmitter 13. The impedance converter 30 is arranged between the AC power supply 12 and the power transmitter 13. The impedance converter 30 includes an LC circuit. The LC circuit includes inductors 30a and 30b and a capacitor 30c. Two power lines connect the AC power supply 12 and the primary-side coil 13a of the power transmitter 13, and the inductors 30a and 30b are arranged on the respective lines. The capacitor 30c is arranged downstream of the inductors 30a and 30b and connected in parallel to the inductors 30a and 30b.

The power supply load impedance Zp is the input impedance of the impedance converter 30, i.e., an impedance from the input end of the impedance converter 30 to the load 22. In other words, the power supply load impedance Zp is the impedance of the section from the output end of the AC power supply 12 to the load 22 and the impedance of all the loads connected to the AC power supply 12. The input impedance Zin of the power transmitter 13 is the impedance from the input end of the power transmitter 13 to the load 22.

As shown in Fig. 2, when the positional displacement of the power transmitter 13 and the power receiver 23 is allowed in an allowable range S, which is set in advance, the changing range of the coupling coefficient k between the coils 13a and 23a, i.e., the upper limit kmax and the lower limit kmin, is determined. The changing range of the coupling coefficient k is the range of the coupling coefficient k that is obtained when the power transmitter 13 and the power receiver 23 are located at any positions within the allowable range S.

The allowable range S shown in Fig. 2 has a columnar shape. However, as long as the range is set in advance, the allowable range S may have any shape. For example, the allowable range S may be set according to the degree of freedom of parking mode in parking the vehicle, i.e., parking variation. When the power receiver 23 is arranged on the bottom of the vehicle, the allowable range S may be set according to variation of the vehicle height. The allowable range S may be a range in which the transmission efficiency between the power transmitter 13 and the power receiver 23 is greater than or equal to a predetermined threshold efficiency. Furthermore, the allowable range S may be a range in which the distance from the power transmitter 13 is less than or equal to a predetermined threshold distance.

In the above configuration, the constant of the impedance converter 30 is set based on the upper limit kmax and the lower limit kmin of the coupling coefficient k. Specifically, in circumstances in which the coupling coefficient k is the geometric mean of the upper limit kmax and the lower limit kmin (√(kmin × kmax)), the input impedance Zin of the power transmitter 13 is set to a reference input impedance Zst. In this case, the constant of the impedance converter 30 is set such that the power supply load impedance Zp becomes a predetermined specific impedance Zt when the input impedance Zin of the power transmitter 13 is the reference input impedance Zst. In other words, the constant of the impedance converter 30 is set corresponding to the input impedance Zin of the power transmitter 13 when the coupling coefficient k is a value between the upper limit kmax and the lower limit kmin.

The specific impedance Zt is an impedance with which the AC power supply 12 properly supplies AC power with a desired power value. The specific impedance Zt is set such that both the output voltage value and the output current value necessary for the AC power supply 12 to supply AC power with the desired power value is sufficiently lower than the rated value (the maximum value). It could be said that the constant is a conversion rate, an inductance, or a capacitance. Considering that the input impedance Zin of the power transmitter 13 is changed with the change of the coupling coefficient k, it could be said that the constant of the impedance converter 30 is set based on the upper limit and the lower limit in the changing range of the input impedance Zin in the power transmitter 13.

Accordingly, the first embodiment achieves the following advantages.
(1) The power transmission unit 11 includes the impedance converter 30, which performs impedance conversion of the input impedance Zin of the power transmitter 13. The impedance converter 30 is arranged between the AC power supply 12 and the power transmitter 13. The constant of the impedance converter 30 is set based on the upper limit kmax and the lower limit kmin in the changing range of the coupling coefficient k of the coils 13a and 23a when the relative positions of the power transmitter 13 and the power receiver 23 change within the predetermined allowable range S. Specifically, the constant of the impedance converter 30 is set corresponding to the input impedance Zin of the power transmitter 13 when the coupling coefficient k has a value between the upper limit kmax and the lower limit kmin. Thus, in comparison with a configuration in which the constant of the impedance converter 30 is set corresponding to the coupling coefficient k that is greater than the upper limit kmax or less than the lower limit kmin, the power supply load impedance Zp is closer to a desired value, e.g., the specific impedance Zt, when the relative positions of the power transmitter 13 and the power receiver 23 are changed within the allowable range S. Therefore, the output power value from the AC power supply 12 is closer to a desired value, and it is possible to deal with changes in the relative positions of the power transmitter 13 and the power receiver 23.
(2) The input impedance Zin of the power transmitter 13 in circumstances in which the coupling coefficient k is √(kmin × kmax) is set to the reference input impedance Zst. The constant of the impedance converter 30 is set such that the power supply load impedance Zp, which is the input impedance of the impedance converter 30, is the predetermined specific impedance Zt when the input impedance Zin of the power transmitter 13 is the reference input impedance Zst. Thus, even when the power transmitter 13 and the power receiver 23 are arranged at positions with which the coupling coefficient k is close to the upper limit kmax or the lower limit kmin, the power supply load impedance Zp approaches the specific impedance Zt to some extent.

### Second Embodiment

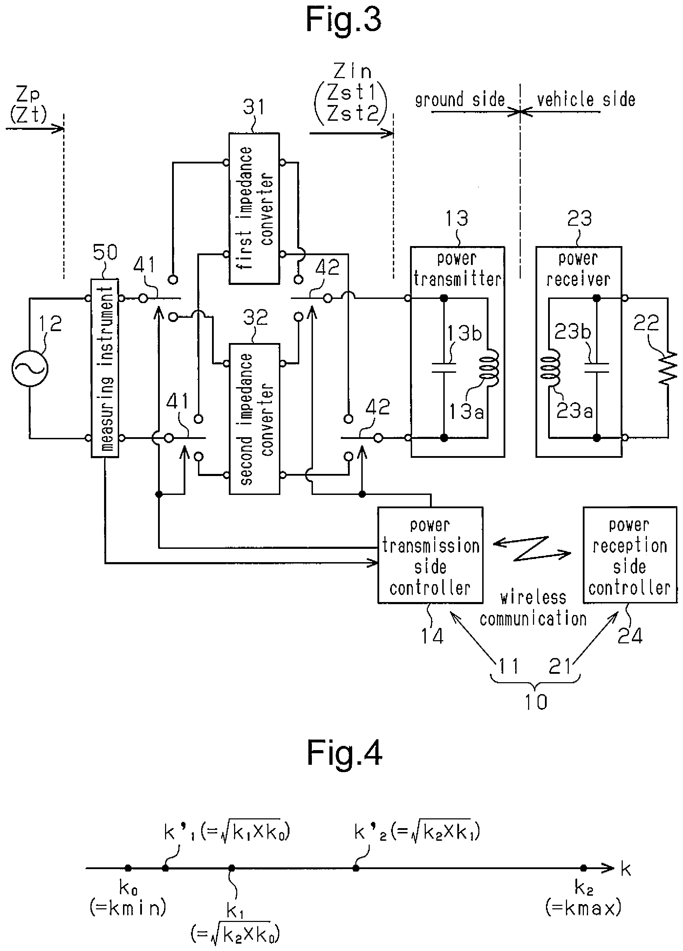

As shown in Fig. 3, the power transmission unit 11 includes two impedance converters 31 and 32. The impedance converters 31 and 32 are each configured the same as the impedance converter 30 of the first embodiment. Thus, a detailed description is omitted.

The power transmission unit 11 includes first relays 41 and second relays 42 as switching portions. The first relays 41 and the second relays 42 switch the transmission destination of AC power so that AC power supplied by the AC power supply 12 is received by the power transmitter 13 via any one of the impedance converters 31 and 32. The first relays 41 are arranged on the input side of the impedance converters 31 and 32. The first relays 41 switch the access destination of the AC power supply 12 to any one of the impedance converters 31 and 32. The second relays 42 are arranged on the output side of the impedance converters 31 and 32. The second relays 42 switch the access destination of the power transmitter 13 to any one of the impedance converters 31 and 32.

According to the above configuration, when the first relays 41 connect the AC power supply 12 to the first impedance converter 31 and the second relays 42 connect the first impedance converter 31 to the power transmitter 13, AC power supplied by the AC power supply 12 is received by the power transmitter 13 via the first impedance converter 31. When the first relays 41 connect the AC power supply 12 to the second impedance converter 32 and the second relays 42 connect the second impedance converter 32 to the power transmitter 13, AC power supplied by the AC power supply 12 is received by the power transmitter 13 via the second impedance converter 32.

The constants of the impedance converters 31 and 32 will now be described.

As shown in Fig. 4, when the two impedance converters 31 and 32 exist, the lower limit kmin of the coupling coefficient k is set to k0, the upper limit kmax is set to k2, and √(k₂ × k₀) is set to k₁. In addition, √(k₁ × k₀) is set to a first coupling coefficient k'₁, and √(k₂ × k₁) is set to a second coupling coefficient k'₂. The input impedance Zin of the power transmitter 13 when the coupling coefficient k of the coils 13a and 23a is the first coupling coefficient k'₁ is set to a first reference input impedance Zst1, and the input impedance Zin of the power transmitter 13 when the coupling coefficient k of the coils 13a and 23a is the second coupling coefficient k'₂ is set to a second reference input impedance Zst2.

In the above configuration, the constant of the first impedance converter 31 is set such that the input impedance of the first impedance converter 31, which is the power supply load impedance Zp, is the specific impedance Zt when the input impedance Zin of the power transmitter 13 is the first reference input impedance Zst1. Similarly, the constant of the second impedance converter 32 is set such that the input impedance of the second impedance converter 32, which is the power supply load impedance Zp, is the specific impedance Zt when the input impedance Zin of the power transmitter 13 is the second reference input impedance Zst2.

In other words, when the number of impedance converters is generalized and is set to n, the lower limit kmin of the coupling coefficient k is set to k₀, and the upper limit kmax is set to kₙ. The p-th coupling coefficient k'ₚ (where p = 1, 2, ..., n) is set to √(kₚ × kₚ₋₁) (where kₚ = √(kₚ₊₁ × kₚ₋₁)). The input impedance Zin of the power transmitter 13 when the coupling coefficient k of the coils 13a and 23a is the p-th coupling coefficient k'ₚ is set to a p-th reference input impedance Zstp. In this case, the constant of a p-th impedance converter (a p-th impedance converting portion) is set such that the power supply load impedance Zp (the input impedance of the p-th impedance converter) is the specific impedance Zt when the input impedance Zin of the power transmitter 13 is the p-th reference input impedance Zstp.

According to the above configuration, for example, in a case in which the relative positions of the power transmitter 13 and the power receiver 23 are positions with which the coupling coefficient k is between the second coupling coefficient k'2 and the upper limit kmax, the power supply load impedance Zp is closer to the specific impedance Zt when the transmission destination of AC power is the second impedance converter 32 than when the transmission destination of AC power is the first impedance converter 31.

For example, in a case in which the relative positions of the power transmitter 13 and the power receiver 23 are positions with which the coupling coefficient k is between the lower limit kmin and the first coupling coefficient k'1, the power supply load impedance Zp is closer to the specific impedance Zt when the transmission destination of AC power is the first impedance converter 31 than when the transmission destination of AC power is the second impedance converter 32.

As shown in Fig. 3, the power transmission unit 11 includes a measuring instrument 50, which measures the power supply load impedance Zp and transmits the measured result to the power transmission side controller 14. The power transmission side controller 14 controls switching of the relays 41 and 42 based on the measured result of the measuring instrument 50. For example, the power transmission side controller 14 controls the relays 41 and 42 such that the transmission destination of AC power is the first impedance converter 31 and determines the power supply load impedance Zp in that state. After that, the power transmission side controller 14 controls the relays 41 and 42 such that the transmission destination of AC power is the second impedance converter 32 and determines the power supply load impedance Zp in that state. The power transmission side controller 14 selects one of the impedance converters with which the power supply load impedance Zp is closer to the specific impedance Zt. The power transmission side controller 14 then controls the relays 41 and 42 to transmit AC power via the selected impedance converter. Thus, AC power is transmitted via the impedance converter that is set corresponding to a value of one of the coupling coefficients k'1 and k'2 that is closer to the current coupling coefficient k.

Accordingly, the second embodiment achieves the following advantage. (3) The power transmission unit 11 includes the impedance converters 31 and 32, the first relays 41, and the second relays 42. The first relays 41 and the second relays 42 switch the transmission destination of AC power so that the AC power supplied by the AC power supply 12 is received by the power transmitter 13 via any one of the impedance converters 31 and 32. In the above configuration, the number of impedance converters 31 and 32 is set to n. When the relative positions of the coils 13a and 23a are changed in the allowable range S, the lower limit kmin of the coupling coefficient k is set to k₀, and the upper limit kmax of the coupling coefficient k is set to kₙ. The p-th coupling coefficient k'ₚ is set to √(kₚ × kₚ₋₁) (where kₚ = √(kₚ₊₁ × kₚ₋₁)). The input impedance Zin of the power transmitter 13 when the coupling coefficient k is the p-th coupling coefficient k'ₚ is set to the p-th reference input impedance Zstp. In this case, the constant of the p-th impedance converter is set such that the power supply load impedance Zp, which is the input impedance of the p-th impedance converter, is the specific impedance Zt when the input impedance Zin of the power transmitter 13 is the p-th reference input impedance Zstp.

According to the above configuration, the power transmission unit 11 includes the impedance converters 31 and 32, and the constants of the impedance converters 31 and 32 are set as above. Thus, even if the coupling coefficient k has a wide changing range, it is possible to deal with changes. In addition, the power supply load impedance Zp further approaches the specific impedance Zt.

Specifically, the changing range of the coupling coefficient k, i.e., a value obtained by subtracting the lower limit kmin from the upper limit kmax, may be large depending on a setting mode of the allowable range S. In this case, if the power transmission unit 11 only includes one impedance converter, the changing range of the coupling coefficient k only includes one value with which the power supply load impedance Zp is the specific impedance Zt. In this case, depending on the relative positions of the power transmitter 13 and the power receiver 23, the power supply load impedance Zp is greatly separated from the specific impedance Zt, and the AC power supply 12 may fail to supply AC power with a desired power value.

In contrast, when the power transmission unit 11 includes the impedance converters 31 and 32 and the constants of the impedance converters 31 and 32 are set as above, the changing range of the coupling coefficient k includes values with which the power supply load impedance Zp becomes the specific impedance Zt, i.e., the p-th coupling coefficients k'ₚ, as many as the number of impedance converters. In other words, since a plurality of p-th coupling coefficients k'ₚ exist, it is easier to find the p-th coupling coefficient k'ₚ that is relatively close to the current coupling coefficient k, which is determined by the relative positions of the power transmitter 13 and the power receiver 23. By selecting the p-th impedance converter that corresponds to the p-th coupling coefficient k'ₚ that is relatively close to the current coupling coefficient k, the power supply load impedance Zp approaches the specific impedance Zt. This allows the output power value of the AC power supply 12 to be a desired value even when the allowable range S is widened and the changing range of the coupling coefficient k is widened.

Even if the changing range of the coupling coefficient k is relatively narrow, by selecting the p-th impedance converter that is set corresponding to the p-th coupling coefficient k'ₚ that is close to the current coupling coefficient k, the power supply load impedance Zp further approaches the specific impedance Zt.

The above-illustrated embodiments may be modified in the following forms.

The constants of the impedance converters 30 to 32 may have variable values. In this case, preferably, each of the impedance converters 30 to 32 has a variable range that is set such that the power supply load impedance Zp becomes the specific impedance Zt when the constant has a value in the central area of the variable range. The value in the central area may be the center value of the variable range or may be the geometric means of the upper limit and the lower limit. In addition, at least one of a variable capacitor and a variable inductor may be employed in the configuration for variable constants. Another configuration may be formed by arranging serial connection bodies, each including a capacitor and a switching element, in parallel, and the combined capacitance is variable by controlling on and off of the switching elements.

The constant of the impedance converter 30 is set corresponding to the geometric means of the upper limit kmax and the lower limit kmin. However, the constant of the impedance converter 30 may be set corresponding to the center value between the upper limit kmax and the lower limit kmin. In a word, the constant of the impedance converter 30 may be set corresponding to the input impedance Zin of the power transmitter 13 when the coupling coefficient k is the coupling coefficient kₓ so that the power supply load impedance Zp is the specific impedance Zt when the coupling coefficient k is a coupling coefficient kₓ between the upper limit kmax and the lower limit kmin.

The circuit configuration of the impedance converters 30 to 32 may be a π type or a T type. A transformer may be used in the impedance converting portion.

In the second embodiment, the number of impedance converters may be three or more.

The impedance converters 30 to 32 may be configured to improve a power factor.

The load 22 may be a predetermined driving portion other than a rectifier and a battery for a vehicle.

The resonance frequency of the power transmitter 13 may differ from the resonance frequency of the power receiver 23 within a range that allows power transmission.

The configuration of the power transmitter 13 may be different from the configuration of the power receiver 23.

The primary-side capacitor 13b may be arranged outside of the power transmitter 13. In this case, the power transmitter 13 includes only the primary-side coil 13a. In other words, it is unnecessary to unitize the primary-side coil 13a and the primary-side capacitor 13b. Similarly, it is also unnecessary to unitize the secondary-side coil 23a and the secondary-side capacitor 23b.

The primary-side coil 13a and the primary-side capacitor 13b may be connected in serial. The secondary-side coil 23a and the secondary-side capacitor 23b may be connected in series.

The capacitors 13b and 23b may be omitted. In this case, preferably, magnetic field resonance is performed using parasitic capacitance of the coils 13a and 23a.

To implement non-contact power transmission, electromagnetic induction may be used instead of magnetic field resonance.

The power receiving unit 21 may be installed in a mobile phone, a robot, a powered wheelchair, or the like.

The power transmitter 13 may include an oscillating circuit that consists of the primary-side coil 13a and the primary-side capacitor 13b and a primary-side coupling coil that is coupled to the oscillating circuit with electromagnetic induction. Similarly, the power receiver 23 includes an oscillating circuit that consists of the secondary-side coil 23a and the secondary-side capacitor 23b and a secondary-side coupling coil that is coupled to the oscillating circuit with electromagnetic inductance.

## Claims

1. A power transmission unit comprising:
an AC power supply that supplies AC power; and
a primary-side coil that receives the AC power, wherein the power transmission unit allows the AC power to be transmitted to a secondary-side coil of a power receiving unit in a non-contact manner,
the power transmission unit being **characterized by** one or more impedance converting portions that are arranged between the AC power supply and the primary-side coil and perform impedance conversion of an input impedance of the primary-side coil,
wherein impedances of the impedance converting portions are set based on a lower limit and an upper limit in a changing range of a coupling coefficient between the primary-side coil and the secondary-side coil in a case in which relative positions of the primary-side coil and the secondary-side coil are changed within a predetermined allowable range.

2. The power transmission unit according to claim 1, **characterized in that** the number of the impedance converting portions is one, and when the lower limit is set to kmin, the upper limit is set to kmax, and the input impedance of the primary-side coil in circumstances in which the coupling coefficient is √(kmin × kmax) is set to a reference input impedance, an impedance of the impedance converting portion is set such that an input impedance of the impedance converting portion becomes a predetermined specific impedance when an input impedance of the primary-side coil is the reference input impedance.

3. The power transmission unit according to claim 1, **characterized in that**
the number of the impedance converting portions is greater than one,
the power transmission unit further comprises a switching portion that switches a transmission destination of the AC power so that the AC power supplied by the AC power supply is received by the primary-side coil via any one of the impedance converting portions,
wherein, when the number of the impedance converting portions is set to n; the lower limit is set to k₀; the upper limit is set to kₙ; the p-th coupling coefficient (where p = 1, 2, ..., n) is set to √(kₚ × kₚ₋₁) (where kₚ = √(kₚ₊₁ × kₚ₋₁)); and an input impedance of the primary-side coil when the coupling coefficient of the primary-side coil and the secondary-side coil is the p-th coupling coefficient is set to a p-th reference input impedance, an impedance of the p-th impedance converting portion of the impedance converting portions is set such that an input impedance of the p-th impedance converting portion becomes a predetermined specific impedance when an input impedance of the primary-side coil is the p-th reference input impedance.

4. The power transmission unit according to claim 1, **characterized in that** impedances of the impedance converting portions are set corresponding to an input impedance of the primary-side coil when the coupling coefficient has a value between the lower limit and the upper limit so that input impedances of the impedance converting portions become predetermined specific impedances when the coupling coefficient has a value between the lower limit and the upper limit.

5. The power transmission unit according to any one of claims 1 to 4, **characterized in that** the impedance converting portions are LC circuits that each include an inductor and a capacitor.

6. A power transmission unit comprising:
an AC power supply that supplies AC power; and
a primary-side coil that receives the AC power, wherein the power transmission unit allows the AC power to be transmitted to a secondary-side coil of a power receiving unit in a non-contact manner,
the power transmission unit being **characterized by** one or more impedance converting portions that are arranged between the AC power supply and the primary-side coil and perform impedance conversion of an input impedance of the primary-side coil,
wherein impedances of the impedance converting portions are set based on a lower limit and an upper limit in a changing range of an input impedance in the primary-side coil when relative positions of the primary-side coil and the secondary-side coil are changed in a predetermined allowable range.

7. A non-contact power transmission device comprising:
an AC power supply that supplies AC power;
a primary-side coil that receives the AC power;
a secondary-side coil capable of receiving the AC power received by the primary-side coil;
a load that receives the AC power received by the secondary-side coil; and
one or more impedance converting portions that are arranged between the AC power supply and the primary-side coil and perform impedance conversion of an input impedance of the primary-side coil,
the non-contact power transmission device being **characterized in that** impedances of the impedance converting portions are set based on a lower limit and an upper limit in a changing range of a coupling coefficient between the primary-side coil and the secondary-side coil when relative positions of the primary-side coil and the secondary-side coil are changed in a predetermined allowable range.
